# EUROPÄISCHE PATENTSCHRIFT

(11) **EP 1 080 789 B1**
(45) Veröffentlichungstag und Bekanntmachung des Hinweises auf die Patenterteilung: **09.11.2005**
(21) Anmeldenummer: 99810791.6
(22) Anmeldetag: 02.09.1999
(51) Int. Cl.: B05B 15/12, B05B 15/04

(54) **Pulverrückgewinnungseinheit**
Powder recovery unit
Unité de récupération de poudre

(43) Veröffentlichungstag der Anmeldung: 07.03.2001
(73) Patentinhaber: H. Börger & Co. GmbH, 25337 Elmshorn (DE)
(72) Erfinder: Kleineidam, Wilhard, 22529 Hambrug (DE); Schweizer, Walter, 8192 Glattfelden (CH)
(74) Vertreter: Thomas, Götz

(56) Entgegenhaltungen:
- EP-A- 0 165 815
- EP-A- 0 225 842
- EP-A- 0 732 151
- US-A- 3 870 375
- US-A- 4 158 071
- US-A- 5 256 201
- US-A- 5 454 256

## Beschreibung

Die Erfindung betrifft eine Pulverrückgewinnungseinheit nach dem Oberbegriff des unabhängigen Patentanspruches.

Zum Transportieren von Pulver bei Pulverbeschichtungsanlagen wird Förderluft benützt. Dabei wird das Pulver in Rohrleitungen mittels einem Luftstrom transportiert. Die Abluft muss anschliessend wieder gereinigt werden und das überflüssige Pulver aus dem Luftstrom entfernt werden. Dazu eignen sich ganz besonders die bekannten Zyklonabscheider. Der mit überflüssigem Pulver belastete Förderstrom gelangt durch einen Zufuhrkanal in radialer Richtung in ein kegelstumpfförmiges Zyklongehäuse. Die zugeführte mit Staub beladene Luft strömt spiralförmig nach unten. Dabei wird das Pulver durch die Zentrifugalkraft zentrifugal an die Innenwand des Gehäuses geschleudert und dabei abgebremst. Es fällt nach unten während die gereinigte Luft durch das zentrale Tauchrohr nach oben abgeführt wird. Das im Zyklonabscheider abgeschiedene Pulver wird durch die Abbremsung und den Kontakt mit der Zyklonwand mechanisch belastet und die Korngrösse wird tendenziell verkleinert. Das bedeutet, dass für die Weiterverwendung des abgeschiedenen Materials die Qualität in bezug auf die Korngrössen nicht mehr genügend einheitlich ist. Der Anteil an überflüssigem Pulver ist erheblich und man sammelt daher dieses abgeschiedene Pulver wieder ein, um es für weitere Beschichtungen wiederzuverwenden. Dazu wird es in einem Zwischentrichter gesammelt und im Pfropfenstrom über eine Leitung wieder den Pulverbehältern im Pulverzentrum der Pulverbeschichtungsanlage zugeführt. Allerdings ist dieses abgeschiedene Pulver, auch wenn es zwecks Verhinderung von Knollenbildung gesiebt wird, sehr uneinheitlich in der Korngrösse und in der Qualität der Oberfläche der Pulverkörner. Zusätzlich kommt es im Pfropfenstrom bei der Förderung zum Pulverzentrum zu nachträglichen Verdichtungen des Pulvers. Dies führt bei der Wiederverwendung zum Farbauftrag zu unregelmässigen Schichtdicken und ungleichmässigen Oberflächen.

In der EP 0 732 151 A2 ist eine Pulverrückgewinnungseinheit gemäß dem Oberbegriff des Anspruchs 1 offenbart. Das Frischpulver wird dort oberhalb des Eingangs der Pulverrückgewinnungseinheit in den Zyklon- oder Staubabscheider zugeführt, wodurch es beim Transport durch den Staubabscheider mechanischen Belastungen und Pulververlusten ausgesetzt ist.

Aufgabe der Erfindung ist es, eine Pulverrückgewinnungseinheit so auszugestalten, dass die Qualität des Pulvers erhalten bleibt und Pulververluste verringert werden.

Diese Aufgabe wird durch die in den Patentansprüchen angegebene Erfindung gelöst.

Ein Vorteil der erfindungsgemässen Pulverrückgewinnungseinheit besteht darin, dass keine oder nur sehr wenig Luft zusätzlich zur Förderung in den Zyklonabscheider benötigt wird.

Die Reinigung der Pulverrückgewinnungseinheit kann sogar ohne Zusatzluft durchgeführt werden, indem die Zufuhr zum Zyklonabscheider mittels einer Schliessklappe kurzfristige geschlossen wird. Dann steht momentan die volle Luftmenge im Zyklon für die Reinigung zur Verfügung.

Die Erfindung wird nachstehend im Zusammenhang mit den Zeichnungen beschrieben.

Es zeigen:
Figur 1 einen Querschnitt durch eine erfindungsgemässe Pulverrückgewinnungseinheit und
Figur 2 das gleiche bei zu Reinigungszwecken abgesenkten Einheiten.

Bei Pulverbeschichtungsanlagen werden die zu beschichtenden Objekte in einer Beschichtungskabine mit dem Farbpulver besprüht. Die Objekte gelangen anschliessend in einen Ofen, wo das leicht haftende Farbpulver zum Farbbelag gebacken wird. In der Beschichtungskabine bleibt immer überschüssiges Farbpulver zurück. Dieses wird meist in einem Kanal am Boden der Kabine gesammelt und mittel Förderluft wegbefördert. Die mit dem überschüssigen Pulver belastete Förderluft gelangt über eine Rohrleitung zu einer Luftreinigungsanlage, wo das mitgeführte Ueberschusspulver so gut wie möglich aus der Luft abgeschieden wird. Dazu wird oft ein Zyklonabscheider verwendet, da ein solcher grosse Luftmengen mit wenig Energieaufwand zu reinigen vermag.

Da die Menge des überschüssigen Pulver doch erheblich ist, versucht man dieses so gut wie möglich zurückzugewinnen und wieder zu verwenden, wie es oben bereits beschrieben ist.

Die neue Pulverrückgewinnungseinheit folgt nun im Anschluss an die Luftreinigung. Also führt der Auslass des Zyklonabscheiders oder eines anderen Luftfilter zum Einlass der erfindungsgemässen Einheit.

Die neue Pulverrückgewinnungseinheit für eine optimierte Weiterverwendung des abzuscheidenden Farbpulvers arbeitet erfindungsgemäss mit drei verschiedenen Massnahmen, welche einander ergänzen.

Eine erste Massnahme besteht in einer dosierten Zumischung und von Frischpulver. Damit wir erreicht, dass eine konstante Qualität des Pulvers für die Wiederverwendung sichergestellt ist.

Eine zweite Massnahme besteht im an die Zudosierung anschliessenden Sieben mittels einem Ultraschallsieb. Diese sogenannte weiche Siebung sorgt dafür, dass das rückgewonnene Pulver und das zugeführte Frischpulver gleichmässig vermischt werden und die Pulvermischung gleichzeitig elektrostatisch neutralisiert wird. Diese Ultraschallsiebung erfolgt so, dass keine horizontal verlaufende, Reibschwingungen auftretet, so wie sie bei normaler Siebung, auch bei normaler Ultraschallsiebung, üblich sind. Die Technik dieser Ultraschallsiebung ist in DE 198 27 752.0 beschrieben und daher als solche bekannt.

Die dritte Massnahme besteht darin, dass die durch Ultraschallsiebung optimal verteilte Mischung aus rückgewonnenem und zugeführtem frischem Pulver ohne weitere Zwischenförderung mittels Luftleitung oder Pfropfenstromförderung zur Pulverbeschichtungsanlage zur Wiederverwendung gelangt. Dies wird erreicht, indem diese gesiebte respektive gemischte Mischung direkt zu den Pulverpistolen der Pulverbeschichtungsanlage gefördert wird. Das heisst, dass ein Pulverkreislauf besteht, bei welchem dem laufend zurückgewonnenen Ueberschusspulver laufend und nur nach Bedarf Frischpulver zugeführt wird.

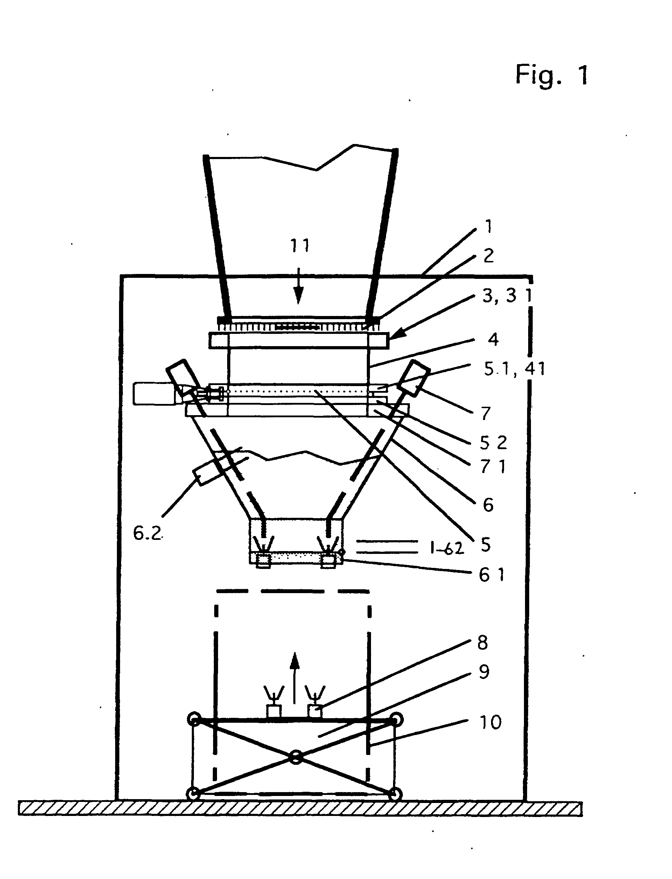

Diese drei Massnahmen werden nun mittels den Elementen gemäss der Figur 1 durchgeführt.

Am Pulverabscheider, beispielsweise einem Zyklonabscheider, wird eine Staubkabine 1 angeschlossen. Diese Staubkabine 1 umschliesst alle weiteren Elemente. Sie weist eine Türe auf, durch welche leere Pulverbehälter 10 eingefahren und volle Pulverbehälter 10 herausgefahren werden können. Es empfiehlt sich, während dem Betrieb im Innern dieser Staubkabine einen leichten Unterdruck aufrechtzuerhalten.

Am Einlass 11 der Staubkabine, respektive am Uebergang vom Pulverabscheider zur Pulverrückgewinnungsvorrichtung ist ein Blendensieb 2 angeordnet. In kleinem Abstand unmittelbar unterhalb dem Blendensieb 2 erfolgt die Zudosierung von Frischpulver. Diese Zudosierung erfolgt, indem von einem Frischpulverbehälter über eine Zuleitung und eine oder mehrere Düsen Frischpulver in den Raum unterhalb dem Blendensieb 2 zugeführt wird. Das mit Frischpulver verbesserte Ueberschusspulver gelangt nun in einen Zwischentrichter 4. Zwischen der Frischpulverzufuhr 3 und dem Konustrichter 4 kann eine erste Ringspaltdüse 31 angeordnet sein. Diese Ringspaltdüse 31 sorgt dafür, dass das Pulver sich nicht am Rande absetzt und gut und gleichmässig in den Zwischentrichter gelangt. Durch pulsierendes Einblasen von Luft durch diese erste Ringspaltdüse 31 kann der Bereich der Frischpulverzugabe 3 und des Zwischentrichters 4 auch gereinigt werden. Dies ist zum Beispiel immer beim Farbwechsel empfehlenswert.

Anschliessend an den Zwischentrichter 4 gelangt das Pulvergemisch auf ein Ultraschallsieb 5. Das Ultraschallsieb 5 hat Maschenweiten von weniger als µ. Es ist schwimmend gelagert, damit mindestens annähernd keine horizontalen Vibrationsreibschwingungen auftreten. Die fast ausschliesslich vertikalen Ultraschallschwingungen des Siebes sorgen für eine optimale Durchmischung des rückgewonnenen Ueberschusspulvers und des zudosierten Frischpulvers. Diese Art von Ultraschallsiebung sorgt für eine gleichmässige und konstante Qualität des Pulvers. Sie hat zudem den Vorteil, dass die Luftströmungen im System nicht beeinflusst werden, wie dies bei einem üblichen Vibrationssieb der Fall ist. Daher gibt es auch keine Rückwirkungen auf den Pulverabscheider und dessen Luftströmungen.

Zwischen Ultraschallsieb 5 und dem Zwischentrichter 4 kann eine zweite Ringspaltdüse 41 analog zur ersten Ringspaltdüse 31 und allenfalls eine Siebabdeckung 51 vorhanden sein. Auch sie dient der Weiterförderung des Pulvergemisches und gleichzeitig der Reinigung des Ultraschallsiebes 5.

Das aus rückgewonnenem überschüssigem und frischem aufbereitete Neupulver wird darauf in einem Fluidbehälter 6 gesammelt und mittels Injektoren 7 direkt in die Zuleitungen zu den Pulverpistolen der Pulverbeschichtungsanlage gefördert. Im Gegensatz zu den herkömmlichen Anlagen geschieht die Zufuhr des Frischpulvers nicht direkt vom Frischpulverbehälter zu den Pulverpistolen, sondern immer über die Frischpulverzufuhr über dem Ultraschallsieb 5 in der Pulverrückgewinnungsanlage. Damit immer genügend Pulver zur Verfügung steht, ist im Pulverbehälter 6 eine Niveausonde 62 angeordnet, welche die Zufuhr von Neupulver, als dem neu aufbereiteten Pulver regulieren hilft. Das heisst, dass bei niedrigem Stand entsprechend mehr Frischpulver über die Frischpulverzufuhr zugeführt wird. Somit ist eine eigentlicher geschlossener Pulverkreislauf vorhanden, in welchem das Ueberschusspulver laufend rückgewonnen und wiederverwendet wird und wobei Frischpulver diesem Kreislauf zugeführt wird, bevor es zu den Pulverpistolen gelangt. Frischpulver wird daher nur soviel zugeführt, wie es für eine einwandfreie Pulverqualität und für die Beschichtung zusätzlich notwendig ist. Es ist offensichtlich, dass der Pulververbrauch bei dieser konsequenten Arbeitsweise erheblich gesenkt werden kann.

Bei einer Reinigung, beispielsweise für einen Farbwechsel, wird Ein Schieber 61 unten am Pulverbehälter geöffnet und das Restpulver fällt von dort in den jeweils untergestellten Pulverbehälter 10. Mit einem Schieber 61 kann der Fluidbehälter 6 geschlossen werden, damit ein voller Pulverbehälter 10 gegen einen leeren ausgetauscht werden kann. Dazu wird der Pulverbehälter 10 vorteilhafterweise auf einen Transportwagen gestellt und mit diesem in die Staubkabine 1 eingefahren oder wieder ausgefahren. Auf dem Boden der Staubkabine 1 kann ein Scherentisch 9 mit hebbaren Blasdüsen angeordnet sein. Wenn kein Transportwagen mit Pulverbehälter 10 untergestellt ist, können der Scherentisch 9 und damit die Blasdüsen 91 angehoben werden. Ueber die Blasdüsen 91 wird dann Reinigungsluft mittels im Fluidbehälter 6 angeordneten ev. beweglichen Injektoren eingeblasen. Auf diese Weise wird der Fluidbehälter 6 innen von Rückständen von Pulver gereinigt. Dies ist jeweils beim Farbwechsel angezeigt. Nach dem Reinigungsvorgang wird der Scherentisch 9 mit den Blasdüsen wieder abgesenkt, worauf wieder ein Transportwagen mit einem leeren Pulverbehälter 10 eingefahren wird.

Eine weitere Verbesserung in bezug auf die Reinigung ergibt sich durch Einfügen eines Düsenringes zwischen der ersten Ringspaltdüse 31 und dem Zwischentrichter 4. Dieser Düsenring kann abwechselnd radial gerichtete Düsen und im Winkel abwärts gerichtete Düsen aufweisen, durch welche beim Reinigungsvorgang Reinigungsluft unter höherem Druck eingeblasen wird. Ein weiterer gleichartiger Düsenring kann zwischen dem Ultraschallsieb 5 und dem Fluidbehälter 6 angeordnet sein.

Die beschriebene Pulverrückgewinnungsanlage wir beispielsweise für einen Farbwechsel gereinigt indem Reinigungsluft über die erste Ringspaltdüse 31 in den Bereich des Zwischentrichters 4 und über eine zweite Ringspaltdüse 41 in den Bereich oberhalb dem Ultraschallsieb (6) geblasen wird. Ebenso kann Reinigungsluft mittels der angehobenen Blasdüsen 8 von unten über Injektoren 7 in den Bereich der Wandung des Fluidbehälters 6 geblasen werden. Durch diese Luftströmungen gelangen Pulverrückstände, welche sich an den Wänden der Elemente und auf dem Ultraschallsieb abgelagert haben nach unten in einen Pulverbehälter. Die Pulverrückgewinnungsvorrichtung ist anschliessend für die Rückgewinnung des Pulver einer anderen Farbe vorbereitet.

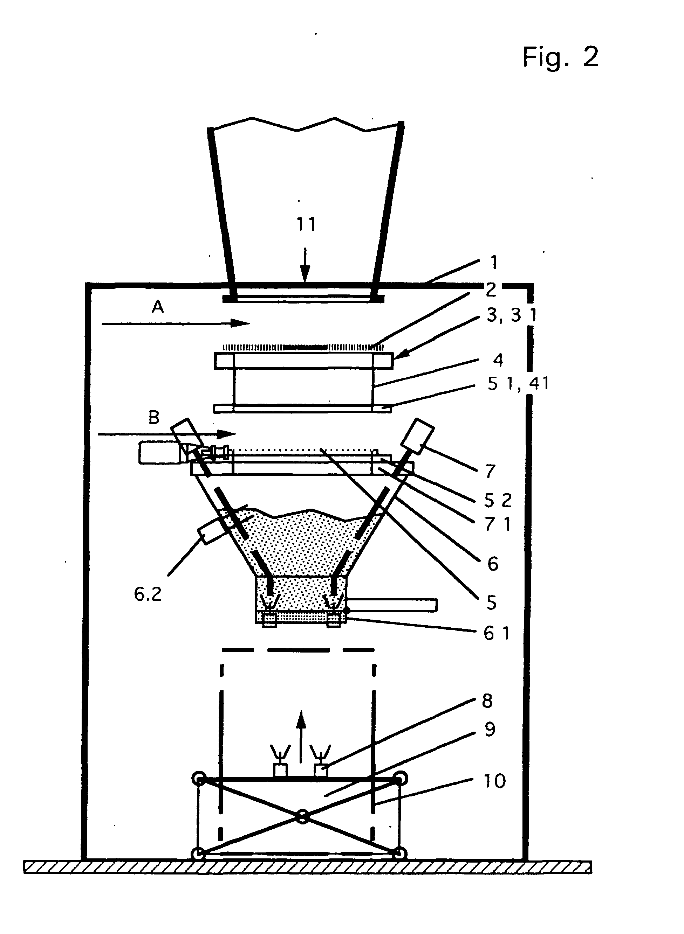

Zu Wartungszwecken kann gemäss Figur 2 auch eine erste Einheit bestehend aus dem Blendensieb 2, der Frischpulverzugabe 3 mit der ersten Ringspaltdüse 31, dem Zwischentrichter 4, der oberen Siebabdeckung mit der zweiten Ringspaltdüse 41 abgesenkt werden, so dass zwischen der Auslassöffnung des Zyklonabscheider und dieser ersten Einheit ein Spalt A entsteht, durch dem man von Hand und mit Pressluft darin arbeiten kann. Beispielsweise können die Innenwände so auch nachgeblasen werden usw. Desgleichen kann als zweite Einheit das Ultraschallsieb 5 mit den Pulverbehälter und sämtlichen dazugehörenden Elementen von der ersten Einheit abgetrennt und abgesenkt werden. Hierbei entsteht ein zweiter Spalt B, welcher die Wartung dieser Elemente erleichtert.

## Patentansprüche

1. Pulverrückgewinnungseinheit zur Aufbereitung von Farbpulver für eine Pulverbeschichtungsanlage, zum Anschluss an einen Staubabscheider zum Abscheiden von Überschusspulver aus Förderluft der Pulverbeschichtungsanlage, mit
- einer Frischpulverzufuhr (3) zum Zudosieren von Frischpulver zu dem abgeschiedenen Überschusspulver,
- einem unterhalb der Frischpulverzufuhr (3) angeordneten Ultraschallsieb (5), auf welches das Überschusspulver und das zudosierte Frischpulver durch Schwerkraft gelangen und bei welchem das Überschusspulver mit dem Frischpulver gleichmäßig vermischt wird,
- einem unterhalb des Ultraschallsiebs (5) angeordneten abschließbaren Fluidbehälter (6), in welchen das gemischte Pulver anschließend durch Schwerkraft gelangt,
- wobei der Fluidbehälter mit Injektoren (7) zur Förderung des gemischten Pulvers mittels Förderluft zu Pulverpistolen der Pulverbeschichtungsanlage versehen ist,
**dadurch gekennzeichnet, dass** am Eingang (11) oberhalb der Frischpulverzufuhr (3) ein Blendensieb (2) vorhanden ist, so dass die Frischpulverzudosierung zu dem im Staubabscheider abgeschiedenen Überschusspulver zwischen dem Blendensieb (2) und dem Ultraschallsieb (5) erfolgt.

2. Pulverrückgewinnungseinheit nach Anspruch 1, **dadurch gekennzeichnet, dass** am Fluidbehälter (6) ein Auslass (62) vorhanden ist, durch welchen das Pulver zu den Pulverpistolen förderbar ist.

3. Pulverrückgewinnungseinheit nach Anspruch 1, **dadurch gekennzeichnet, dass** zwischen der Frischpulverzufuhr (3) und einem Zwischentrichter (4) eine erste Ringspaltdüse (31) vorhanden ist und/oder, dass zwischen dem Zwischentrichter (4) und dem Ultraschallsieb (5) eine zweite Ringspaltdüse (41) vorhanden ist.

4. Pulverrückgewinnungseinheit nach Anspruch 1, **dadurch gekennzeichnet, dass** im Fluidbehälter (6) eine Niveausonde (62) zur Steuerung der Frischpulverzufuhr vorhanden ist.

5. Pulverrückgewinnungseinheit nach einem der Ansprüche 1 bis 4, **dadurch gekennzeichnet, dass** unterhalb des Auslasses des Fluidbehälters (6) ein Pulverbehälter (10) ein- und ausfahrbar ist.

6. Pulverrückgewinnungseinheit nach Anspruch 1, **dadurch gekennzeichnet, dass** das Ultraschallsieb (5) schwimmend gelagert ist.

7. Pulverrückgewinnungseinheit nach Anspruch 1, **dadurch gekennzeichnet, dass** Blasdüsen (8) vorhanden sind, welche bei ausgefahrenem Pulverbehälter (10) anhebbar sind, so dass mittels dieser Blasdüsen (8) der Fluidbehälter (6) reinigbar ist.

8. Pulverrückgewinnungseinheit nach einem der Ansprüche 1 bis 7, **dadurch gekennzeichnet, dass** eine erste Einheit bestehend aus dem Blendensieb (2), der Frischpulverzufuhr (3), dem Zwischentrichter (4) und den Ringspaltdüsen (31, 41) absenkbar ist und/oder dass eine zweite Einheit bestehend aus dem Ultraschallsieb (5) und dem Fluidbehälter (6) absenkbar ist.

9. Pulverrückgewinnungseinheit nach Anspruch 1, **dadurch gekennzeichnet, dass** eine Staubkabine (1) die Einheit während des Betriebs dichtend umfängt und dass das Innere der Staubkabine (1) dabei unter einem Unterdruck steht.

10. Pulverrückgewinnungseinheit nach Anspruch 9, **dadurch gekennzeichnet, dass** der Pulverbehälter (10) mittels eines Transportwagens durch eine Türe in der Staubkabine (1) ein- und ausfahrbar ist.

11. Verfahren zur Aufbereitung von Farbpulver für eine Pulverbeschichtungsanlage, wobei Überschusspulver mittels eines Staubabscheiders aus der Förderluft abgeschieden wird, wobei dem abgeschiedenen Überschusspulver in einer Pulverrückgewinnungseinheit mittels einer Frischpulverzufuhr (3) Frischpulver zudosiert wird, wonach das Überschusspulver mit dem zudosierten Frischpulver unter Schwerkraft auf ein Ultraschallsieb (5) gelangt, bei welchem Ultraschallsieb (5) das Überschusspulver mit dem Frischpulver gleichmäßig vermischt wird, wonach das gemischte Pulver unter Schwerkraft in einen abschließbaren Fluidbehälter (6) gelangt und von diesem mittels Förderluft Pulverpistolen der Pulverbeschichtungsanlage zugeführt wird, **dadurch gekennzeichnet, dass** die Zudosierung des Frischpulvers unterhalb von einem am Übergang vom Staubabscheider zur Pulverrückgewinnungseinheit angeordneten Blendensieb (2) erfolgt.

## Claims

1. Powder recovery unit for processing coloured powder for a powder coating installation, for connection to a dust separator used to separate excess powder out of carrier air in the powder coating installation, having
- a fresh powder feed (3) for metering fresh powder to the excess powder which has been separated out,
- an ultrasound screen (5), which is arranged below the fresh powder feed (3), onto which the excess powder and the fresh powder which has been metered in pass under the force of gravity and at which the excess powder is uniformly mixed with the fresh powder,
- a fluid container (6) which can be closed off, is arranged below the ultrasound screen (5) and into which the mixed powder then passes under the force of gravity,
- the fluid container being provided with injectors (7) for delivering the mixed powder by means of carrier air to powder guns of the powder coating installation,
**characterized in that** a diaphragm screen (2) is provided at the entry (11) above the fresh powder feed (3), so that the metering of fresh powder to the excess powder which has been separated out in the dust separator takes place between the diaphragm screen (2) and the ultrasound screen (5).

2. Powder recovery unit according to Claim 1, **characterized in that** an outlet (62), through which the powder can be delivered to the powder guns, is present at the fluid container (6).

3. Powder recovery unit according to Claim 1, **characterized in that** a first annular nozzle (31) is present between the fresh powder feed (3) and an intermediate hopper (4) and/or **in that** a second annular nozzle (41) is present between the intermediate hopper (4) and the ultrasound screen (5).

4. Powder recovery unit according to Claim 1, **characterized in that** a level sensor (62) for controlling the supply of fresh powder is present in the fluid container (6).

5. Powder recovery unit according to one of Claims 1 to 4, **characterized in that** a powder container (10) can be moved in beneath the outlet of the fluid container (6) and moved out again.

6. Powder recovery unit according to Claim 1, **characterized in that** the ultrasound screen (5) is mounted in floating fashion.

7. Powder recovery unit according to Claim 1, **characterized in that** there are blowing nozzles (8) which can be raised when the powder container (10) is moved out, so that the fluid container (6) can be cleaned by means of these blowing nozzles (8).

8. Powder recovery unit according to one of Claims 1 to 7, **characterized in that** a first unit comprising the diaphragm screen (2), the fresh powder feed (3), the intermediate hopper (4) and the annular nozzles (31, 41) can be lowered, and/or **in that** a second unit comprising the ultrasound screen (5) and the fluid container (6) can be lowered.

9. Powder recovery unit according to Claim 1, **characterized in that** a dust booth (1) surrounds the unit in a sealing manner during operation, and **in that** the interior of the dust booth (1) is then at a subatmospheric pressure.

10. Powder recovery unit according to Claim 9, **characterized in that** the powder container (10) can be moved in and out by means of a transport carriage through a door in the dust booth (1).

11. Method for processing coloured powder for a powder coating installation, in which excess powder is separated out of the carrier air by means of a dust separator, in which fresh powder is metered to the excess powder which has been separated out in a powder recovery unit by means of a fresh powder feed (3), after which the excess powder together with the fresh powder which has been metered to it passes onto an ultrasound screen (5) under the force of gravity, at which ultrasound screen (5) the excess powder is uniformly mixed with the fresh powder, after which the mixed powder passes under the force of gravity into a fluid container (6) which can be closed off and is fed from this container to powder guns of the powder coating installation by means of carrier air,
**characterized in that** the fresh powder is added below a diaphragm screen (2) arranged at the transition from the dust separator to the powder recovery unit.

## Revendications

1. Unité de récupération de poudre pour la préparation de poudre colorante pour une installation de revêtement par poudre, laquelle unité de récupération est destinée à être raccordée à un dispositif de précipitation de poussière pour séparer la poudre excédentaire de l'air de transport de l'installation de revêtement par poudre et qui présente :
- une amenée de poudre fraîche (3) qui amène de manière dosée de la poudre fraîche à la poudre excédentaire qui a précipité,
- un tamis à ultrasons (5) qui est agencé en dessous de l'amenée de poudre fraîche (3) et sur lequel la poudre excédentaire et la poudre fraîche amenée par dosage aboutissent par gravité et se mélangent uniformément,
- un récipient à fluide apte à être fermé (6), agencé en dessous du tamis à ultrasons (5) et dans lequel la poudre mélangée aboutit ensuite par gravité,
- le récipient à fluide étant muni d'injecteurs (7) qui amènent au moyen d'air de transport la poudre mélangée à des pistolets à poudre de l'installation de revêtement par poudre,
**caractérisée en ce qu'**un tamis à lamelles (2) est prévu à l'entrée (11) située au-dessus de l'amenée de poudre fraîche (3) de telle sorte que l'apport dosé de poudre fraîche à la poudre excédentaire qui a précipité dans le dispositif de précipitation de poussière a lieu entre le tamis à lamelles (2) et le tamis à ultrasons (5).

2. Unité de récupération de poudre selon la revendication 1, **caractérisée en ce que** le récipient à fluide (6) est muni d'une sortie (62) qui permet de transporter la poudre jusqu'aux pistolets à poudre.

3. Unité de récupération de poudre selon la revendication 1, **caractérisée en ce qu'**un premier ajutage à interstice annulaire (31) est prévu entre l'amenée de poudre fraîche (3) et un entonnoir intermédiaire (4) et/ou **en ce qu'**un deuxième ajutage à interstice annulaire (41) est prévu entre l'entonnoir intermédiaire (4) et le tamis à ultrasons (5).

4. Unité de récupération de poudre selon la revendication 1, **caractérisée en ce qu'**une sonde de niveau (62) destinée à commander l'amenée de poudre fraîche est prévue dans le récipient à fluide (6).

5. Unité de récupération de poudre selon l'une des revendications 1 à 4, **caractérisée en ce qu'**un récipient à poudre (10) peut être placé en dessous de la sortie du récipient à fluide (6) et en être retiré.

6. Unité de récupération de poudre selon la revendication 1, **caractérisée en ce que** le tamis à ultrasons (5) est monté de manière flottante.

7. Unité de récupération de poudre selon la revendication 1, **caractérisée en ce que** sont prévus des ajutages soufflants (8) qui, lorsque le récipient à poudre (10) est retiré, peuvent être soulevés de manière telle que l'on peut nettoyer le récipient à fluide (6) au moyen de ces ajutages soufflants (8).

8. Unité de récupération de poudre selon l'une des revendications 1 à 7, **caractérisée en ce qu'**une première unité constituée du tamis à lamelles (2), de l'amenée de poudre fraîche (3), de l'entonnoir intermédiaire (4) et des ajutages à interstice annulaire (31, 41) peut être abaissée et/ou **en ce qu'**une deuxième unité constituée du tamis à ultrasons (5) et du récipient à fluide (6) peut être abaissée.

9. Unité de récupération de poudre selon la revendication 1, **caractérisée en ce qu'**un cabinet à poussière (1) entoure l'unité de manière étanche en fonctionnement et **en ce que** l'intérieur du cabinet à poussière (1) est alors placé en dépression.

10. Unité de récupération de poudre selon la revendication 9, **caractérisée en ce que** le récipient à poudre (10) peut être entré et sorti au moyen d'un wagonnet de transport et par une porte ménagée dans le cabinet à poussière (1).

11. Procédé de préparation de poudre colorante pour une installation de revêtement par poudre, dans lequel la poudre excédentaire est séparée de l'air de transport au moyen d'un dispositif de précipitation de poudre et dans lequel de la poudre fraîche est ajoutée de manière dosée à la poudre excédentaire précipitée au moyen d'une amenée de poudre fraîche (3) dans une unité de récupération de poudre, après quoi la poudre excédentaire et la poudre fraîche amenée de manière dosée aboutissent par gravité sur un tamis à ultrasons (5) sur lequel la poudre excédentaire et la poudre fraîche sont mélangées uniformément, après quoi la poudre mélangée aboutit par gravité dans un récipient à fluide apte à être fermé (6) et, de celui-ci, est amenée au moyen d'air de transport à des pistolets à poudre de l'installation de revêtement par poudre, **caractérisé en ce que** la poudre fraîche est apportée de manière dosée en dessous d'un tamis à lamelles (2) agencé à la transition entre le dispositif de précipitation de poudre et l'unité de récupération de poudre.
